# EUROPÄISCHE PATENTANMELDUNG

(11) **EP 4 559 744 A1**
(43) Veröffentlichungstag der Anmeldung: **28.05.2025**
(21) Anmeldenummer: 23212361.2
(22) Anmeldetag: 27.11.2023
(51) Int. Cl.: B60N 2/02, B60N 2/07

(54) **LÄNGSVERSTELLEINRICHTUNG UND FAHRZEUGSITZ**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); ZALAVARI, Kornel, 42659 Solingen (DE); MAYER, Thomas, 42477 Radevormwald (DE); HEEG, Norbert, 66994 Dahn (DE)
(74) Vertreter: Liedtke & Partner Patentanwälte

(57) **Zusammenfassung**

Die Erfindung betrifft eine Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114), in welcher eine Positionserkennungseinrichtung (118) zur Erfassung einer eingenommenen Verstellposition angeordnet ist, wobei die Positionserkennungseinrichtung (118) als ein Mikroschalter (120) ausgebildet ist.

## Beschreibung

Die Erfindung betrifft eine Längsverstelleinrichtung für einen Fahrzeugsitz sowie einen solchen Fahrzeugsitz.

### Stand der Technik

Aus der PCT/IB2023/057150 ist eine elektrische Längsverstelleinrichtung bekannt, bei welcher vor Inbetriebnahme der Sitzverstellung ein Reibrad auf eine Schiene abgesenkt wird, um einen reibschlüssigen Antrieb zwischen Reibrad (auch Antriebsrad genannt) sicherzustellen. Aufgrund des Reibradantriebs besteht kein direkter Zusammenhang zwischen Motorrotation und Linearbewegung, da der Fahrzeugsitz an jeder beliebigen Position auf der Schiene einbaubar ist.

### Aufgabe

Der Erfindung liegt die Aufgabe zu Grunde, eine Längsverstelleinrichtung der eingangs genannten Art zu verbessern, insbesondere hinsichtlich der Erkennung von Sicherheitsfunktionen und/oder Komfortfunktionen zu verbessern sowie einen entsprechenden Fahrzeugsitz bereitzustellen.

### Lösung

Die erstgenannte Aufgabe wird erfindungsgemäß gelöst durch eine Längsverstelleinrichtung mit den Merkmalen des Anspruchs 1. Die zweitgenannte Aufgabe wird erfindungsgemäß gelöst durch einen Fahrzeugsitz mit den Merkmalen des Anspruchs 15. Vorteilhafte Ausgestaltungen, welche einzeln oder in Kombination miteinander eingesetzt werden können, sind Gegenstand der Unteransprüche.

Die erfindungsgemäße Längsverstelleinrichtung für einen Fahrzeugsitz umfasst zumindest eine Schienenanordnung mit einer festen Unterschiene und einer zur Unterschiene verstellbaren Oberschiene, in welcher eine Positionserkennungseinrichtung zur Erfassung einer eingenommenen Verstellposition angeordnet ist. Die Positionserkennungseinrichtung kann beispielsweise als ein Mikroschalter ausgebildet sein.

Dadurch, dass die Oberschiene über eine Positionserkennungseinrichtung verfügt, die als Mikroschalter ausgebildet ist, kann beim Einbau des Sitzes an einer beliebigen Position über die gesamte Länge der Unterschiene bei einer nächsten Verstellung der Oberschiene und damit des Fahrzeugsitzes die momentane Sitzposition ermittelt werden. Insbesondere ermöglicht die Erfindung, dass mittels einer als Mikroschalter ausgebildeten Positionserkennungseinrichtung auch unterschiedliche, für Sicherheitsfunktionen und/oder Komfortfunktionen des Fahrzeugsitzes vorgesehene Schienenabschnitte, zum Beispiel ein Easy-Entry-Bereich, ein Sitzkomfortbereich oder dergleichen, ermittelt werden können.

Die Längsverstelleinrichtung kann zur Verstellung der Oberschiene relativ zur Unterschiene zumindest das als Reibrad ausgebildete Antriebsrad und zusätzlich eine Anzahl von Rädern umfassen, die eingerichtet sind, auf einer den Rädern zugewandten Kontaktfläche der Unterschiene abzurollen und die Oberschiene relativ zu der Unterschiene zu verstellen.

Beispielsweise kann der Mikroschalter als ein einfacher, zwei Schaltzustände aufweisender Schalter ausgebildet sein. Insbesondere kann der Mikroschalter als ein Drucktaster, ein Einfachschalter oder ein Umschaltschalter ausgebildet sein. Beispielsweise kann der Mikroschalter ständig bestromt sein, wobei unterschiedlich große Schaltwiderstände vorgesehen sind, die jeweils einen Schaltzustand repräsentieren. Der Mikroschalter kann eine eigene Sensorelektronik mit Funktionsüberwachung umfassen. Bei einem Sensorausfall detektiert die Sensorelektronik einen unendlichen großen Widerstand.

Der Mikroschalter kann beispielsweise einen in Richtung des Fahrzeugsitzes weisenden Kontaktanschluss umfassen. Dadurch kann der Mikroschalter direkt mit einer Sitzelektronik des Fahrzeugsitzes oder einem Steuergerät elektrisch verbunden werden, insbesondere wenn die Oberschiene mit dem Fahrzeugsitz verbunden wird.

Der Mikroschalter kann zusätzlich mit einem Abtastelement versehen sein. Das Abtastelement kann beispielsweise innerhalb der Schienenanordnung mit einem Gegenabtastelement in Wechselwirkung stehen. Durch eine Anordnung des Abtastelements innerhalb der Oberschiene und eine Anordnung des Gegenabtastelements in einem Schieneninnenraum zwischen Unterschiene und Oberschiene sind sowohl der Mikroschalter als auch das Abtastelement und das Gegenabtastelement geschützt angeordnet.

Das Abtastelement kann beispielsweise als ein Federelement ausgebildet sein. Beispielsweise kann das Federelement als eine Flachformfeder oder Bandfeder ausgebildet sein. Insbesondere kann das Federelement als eine Bogenfeder ausgebildet sein. Zur Erzielung der Abtastfunktion kann das Federelement als eine Rückstellfeder ausgebildet sein.

Beispielsweise kann das Abtastelement an einem vom Mikroschalter abgewandten Ende des Federelements eine Abtastspitze aufweisen. Die Abtastspitze kann beispielsweise s-förmig, u-förmig oder als ein gebogener Vorsprung ausgebildet sein. Ein der Abtastspitze gegenüberliegendes Ende des Federelements kann ortsfest ausgebildet sein. Beispielsweise kann das ortsfeste Ende des Federelements mit dem Mikroschalter gekoppelt, insbesondere an diesem befestigt sein. Ein zwischen der Abtastspitze und dem ortsfesten Ende liegender Federabschnitt kann als Betätigungsabschnitt zum Betätigen eines Schaltelements des Mikroschalters ausgebildet sein.

Die Abtastspitze und das Federelement können insbesondere derart eingerichtet sein, dass beim Niederdrücken der Abtastspitze der Betätigungsabschnitt des Federelements in Richtung des Schaltelements des Mikroschalters bewegbar, insbesondere drückbar, ist, wobei der Betätigungsabschnitt mit diesem Schaltelement des Mikroschalters kontaktiert, insbesondere in Kontakt oder Eingriff gelangt, und dieses Schaltelement betätigt.

Das Gegenabtastelement kann beispielsweise derart ausgebildet sein, dass das Abtastelement bei einem Verstellen der Oberschiene relativ zur Unterschiene mit dem Gegenabtastelement abschnittsweise kontaktiert und abschnittsweise nicht kontaktiert.

Beispielsweise kann das Gegenabtastelement eine Anzahl von verschiedenen Längsverstellpositionen repräsentierenden Tastabschnitten umfassen, die mittels des Abtastelements abtastbar sind, um eine die verschiedenen Längsverstellpositionen repräsentierende Signalfolge am Mikroschalter zu erzeugen. Hierzu kann das Gegenabtastelement zum Beispiel als eine Rippe oder dergleichen ausgebildet sein. Anstelle einer Rippe kann das Gegenabtastelement auch als eine Nut oder als ein Schlitz jeweils mit Vorsprüngen in diesen zur Ausbildung von Abschnitten eingerichtet sein.

Die Rippe kann eine Anzahl von Rippenabschnitten umfassen. Jedem Rippenabschnitt ist insbesondere eine Längsverstellposition zugeordnet. Beispielsweise kann einem ersten Rippenabschnitt eine erste Längsverstellposition in einem Komfortbereich zur Einstellung einer komfortablen Sitzposition zugeordnet sein. Einem zweiten Rippenabschnitt kann eine zweite Längsverstellposition in einem Easy-Entry-Bereich zur Einstellung eines verbesserten Zugangs zu einem hinteren Sitzbereich zugeordnet sein. Die Rippenabschnitte können jeweils eine zugehörige Rippenhöhe, eine zugehörige Rippenlänge und/oder eine zugehörige Rippenbreite umfassen. Beispielsweise können die verschiedenen, insbesondere zwei aneinander grenzenden, Längsverstellpositionen des Fahrzeugsitzes durch identische Rippenhöhe bei unterschiedlicher Rippenlänge oder durch unterschiedliche Rippenhöhe bei identischer Rippenlänge oder einer anderen geeigneten Kombination von Rippenhöhe, Rippenlänge und/oder Rippenbreite der Rippe konfiguriert sein.

Das Gegenabtastelement kann beispielsweise an der Unterschiene innerhalb der Schienenanordnung angeordnet sein. Insbesondere kann das Gegenabtastelement als Rippe mit unterschiedlicher Rippenhöhe, unterschiedlicher Rippenlänge und/oder unterschiedlicher Rippenbreite an einer Innenseite der Unterschiene ausgebildet sein.

Der Mikroschalter kann beispielsweise innenseitig in der Oberschiene angeordnet sein. Insbesondere kann der Mikroschalter in der beweglichen Oberschiene (auch Schienenschlitten genannt) angeordnet und befestigt sein. Die Oberschiene mit dem eingebauten Mikroschalter kann wiederum innerhalb der Unterschiene, insbesondere innerhalb einer wesentlich längeren Unterschiene als die obere Oberschiene, angeordnet und befestigt sein. Die Unterscheine kann einen Durchbruch aufweisen, durch welchen das Abtastelement beim Verstellen der Oberschiene mit der Rippe an der gegenüberliegenden Innenseite der Unterschiene abschnittsweise kontaktiert oder nicht kontaktiert. Insbesondere in Abhängigkeit von den jeweils konfigurierten Rippenabschnitten und einer daraus resultierenden Abtastfolge des Abtastelements am Gegenabtastelement kann der Mikroschalter eine entsprechende Signalfolge erzeugen, welche verschiedene Längsverstellpositionen des Fahrzeugsitzes repräsentieren.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht einer erfindungsgemäßen Längsverstelleinrichtung mit einem in einer Oberschiene eingebauten Mikroschalter als Positionserkennungseinrichtung,
- Fig. 3:: eine perspektivische Ansicht der Längsverstelleinrichtung mit einer aus der Unterschiene teilausgefahrenen Oberschiene zur Montage des Mikroschalters in der Oberschiene,
- Fig. 4:: eine perspektivische Ansicht der Längsverstelleinrichtung mit der aus der Unterschiene teilausgefahrenen Oberschiene und mit montiertem Mikroschalter,
- Fig. 5:: eine perspektivische und im Bereich des montierten Mikroschalters teilausgeschnittene Ansicht der Längsverstelleinrichtung, und
- Fig. 6:: eine Schnittdarstellung der Längsverstelleinrichtung.

Einander entsprechende Teile sind in allen Figuren mit den gleichen Bezugszeichen versehen.

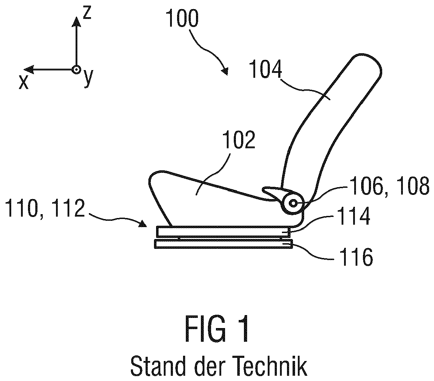

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

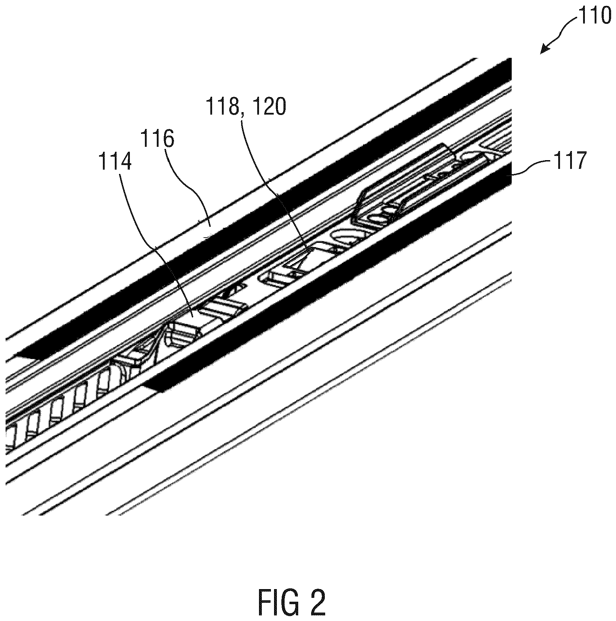

Figur 2 zeigt eine perspektivische Ansicht einer erfindungsgemäßen Längsverstelleinrichtung 110 mit einer Positionserkennungseinrichtung 118, die in der beweglichen Oberschiene 114 (auch Schienenschlitten oder Schienengleiter genannt) eingebaut ist. Die Oberschiene 114 ist wiederum in der fixierten Unterschiene 116 in Längsrichtung x verstellbar angeordnet.

Die Unterschiene 116 weist eine Kontaktfläche 117 zum Abrollen eines als Reibrad ausgebildeten Antriebsrads (nicht dargestellt) zur Verstellung der Oberschiene 114 relativ zur Unterschiene 116 in Längsrichtung x auf.

Die Positionserkennungseinrichtung 118 ist als ein Mikroschalter 120 ausgebildet. Die Oberschiene 114 kann im montierten Zustand mittels einer nicht dargestellten Verriegelungseinrichtung in einer gewünschten Position, insbesondere einer Längsposition, in Längsrichtung x verriegelt werden.

Üblicherweise umfasst der Fahrzeugsitz 100 zwei parallel zueinander angeordnete Längsverstelleinrichtungen 110, die zur Verstellung des Fahrzeugsitzes 100 synchron in Längsrichtung x bewegt werden können.

Zur Bestimmung der eingenommenen oder eingestellten Längsposition des Fahrzeugsitzes 100 im Fahrzeug ist es ausreichend, wenn der Mikroschalter 120 nur in einer der Oberschienen 114 der beiden Längsverstelleinrichtungen 110 angeordnet und befestigt ist.

Beispielsweise kann der Mikroschalter 120 als ein einfacher Schalter mit zwei Schaltzuständen ausgebildet sein. Zum Beispiel kann der Mikroschalter 120 als ein Drucktaster, ein Einfachschalter oder ein Umschaltschalter ausgebildet sein. Der Mikroschalter 120 ist insbesondere als ein mechanisch betätigbarer elektrischer Schalter ausgebildet.

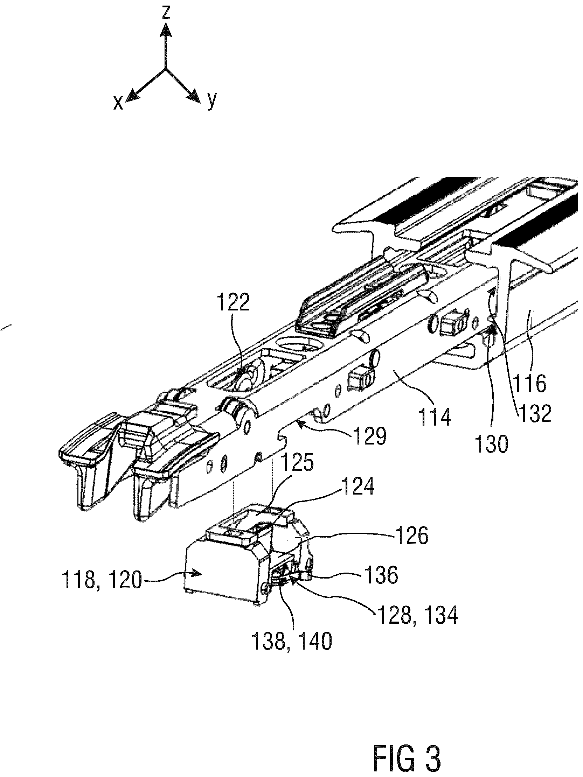

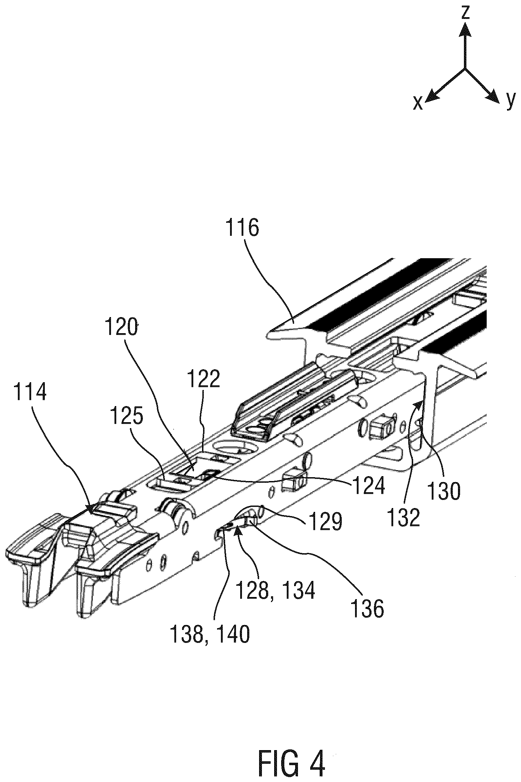

Figur 3 zeigt eine perspektivische Ansicht der Längsverstelleinrichtung 110 mit einer aus der Unterschiene 116 teilausgefahrenen Oberschiene 114 zur Montage des Mikroschalters 120 in der Oberschiene 114. Figur 4 zeigt eine perspektivische Ansicht der Längsverstelleinrichtung 110 mit der aus der Unterschiene 116 teilausgefahrenen Oberschiene 114 und mit in der Oberschiene 114 montiertem Mikroschalter 120.

Der Mikroschalter 120 kann beispielsweise innenseitig in der Oberschiene angeordnet sein. Insbesondere kann der Mikroschalter 120 in der beweglichen Oberschiene 114 (auch Schienenschlitten genannt) angeordnet und befestigt sein. Die Oberschiene 114 mit dem eingebauten Mikroschalter 120 kann wiederum innerhalb der Unterschiene 116, insbesondere innerhalb einer wesentlich längeren Unterschiene 116 als die obere Oberschiene 114, angeordnet und befestigt sein.

Der Mikroschalter 120 kann beispielsweise einen in Richtung des Fahrzeugsitzes weisenden Kontaktanschluss 124 umfassen. Dadurch kann der Mikroschalter 120 direkt mit einer Sitzelektronik (nicht dargestellt) des Fahrzeugsitzes 100 oder einem Steuergerät elektrisch verbunden werden, insbesondere wenn die Oberschiene 114 mit dem Fahrzeugsitz 100 verbunden wird oder ist.

Die Oberschiene 114 kann hierzu beispielsweise im Bereich des Mikroschalters 120 eine Kontaktöffnung 122 oder einen Durchbruch aufweisen, durch welche/n der Kontaktanschluss 124 des Mikroschalters 120 mit einer Sitzelektronik (nicht näher dargestellt) kontaktiert werden kann oder ist.

Der Mikroschalter 120 kann formschlüssig und/oder kraftschlüssig in der Kontaktöffnung 122 angeordnet und gehalten sein. Der Mikroschalter 120 kann lösbar in der Kontaktöffnung 122 gehalten sein. Beispielsweise kann der Mikroschalter 120 einen Gehäuseflansch 125 umfassen, über welchen der Mikroschalter 120 an der Oberschiene 114 und/oder an dem Fahrzeugsitz 100 formschlüssig und/oder kraftschlüssig befestigt werden kann, zum Beispiel geschraubt oder geklippst werden kann.

Der Mikroschalter 120 kann eine eigene Sensorelektronik 126 mit Funktionsüberwachung umfassen. Die Sensorelektronik 126 kann eingerichtet sein, sowohl einen Sensorausfall als auch eine eingenommene oder eingestellte Längsposition und/oder die zugehörige Sicherheitsfunktion und/oder Komfortfunktion des Fahrzeugsitzes 100 zu bestimmen.

Der Mikroschalter 120 kann mit einem Abtastelement 128 (auch als Betätigungselement bezeichnet) versehen sein

Das Abtastelement 128 kann beispielsweise innerhalb der Schienenanordnung 112 oder des Schienenpaares der Längsverstelleinrichtung 110 mit einem Gegenabtastelement 130 in Wechselwirkung stehen. Hierzu kann die Oberschiene 114 in einer Seitenwand eine Tastöffnung 129 umfassen, in welche und durch welche hindurch das Abtastelement 128 in Richtung des Gegenabtastelements 130 aus der Oberschiene 114 herausragt, wie in Figur 4 gezeigt.

Durch eine Anordnung des Mikroschalters 120 innerhalb der Oberschiene 114 und die Anordnung des Gegenabtastelements 130 in einem durch die Unterschiene 116 und die Oberschiene 114 gebildeten Zwischenraum 132 sind sowohl der Mikroschalter 120 mit dem aus der Oberschiene 114 herausragenden Abtastelement 128 als auch das Gegenabtastelement 130 geschützt angeordnet.

Das Abtastelement 128 kann beispielsweise als ein Federelement 134, insbesondere als eine Flachformfeder oder eine Bandfeder, ausgebildet sein. Insbesondere kann das Federelement 134 als ein federbelasteter Hebel oder ein Federarm zur Erzielung der Abtastfunktion ausgebildet sein.

Das Abtastelement 128 kann normal "offen" oder normal "geschlossen" ausgebildet sein. Das Abtastelement 128 ist im Ausführungsbeispiel normal offen ausgebildet. Mittels des Abtastelements 128 können im Mikroschalter 120 angeordnete interne Schaltelemente oder Schaltkontakte der Sensorelektronik 126 betätigt werden, insbesondere geöffnet und/oder geschlossen werden.

Die Stromversorgung erfolgt typischerweise über den Kontaktanschluss 124, die in den Mikroschalter 120 führt. Sobald das Abtastelement 128 (Federarm oder Federhebel) bewegt wird, wird die Kraft auf das/die interne/n Schaltelement/e des Mikroschalters 120 übertragen und dieser/diese wird/werden betätigt.

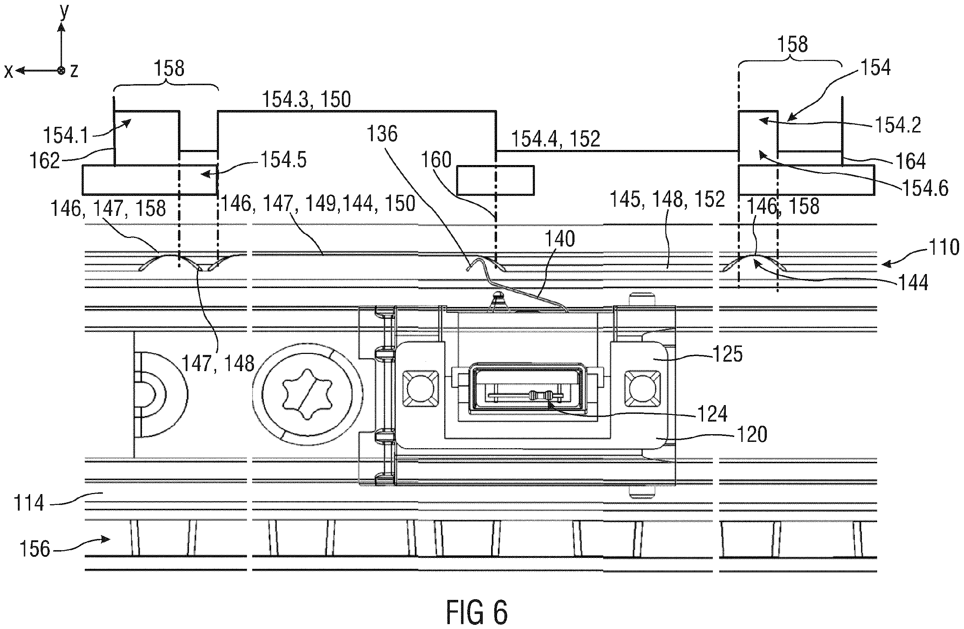

Beispielsweise kann das Abtastelement 128 an einem vom Mikroschalter 120 abgewandten freien Ende des Federelements 134 eine Abtastspitze 136 aufweisen. Diese Abtastspitze 136 kann beispielsweise s-förmig, u-förmig oder als ein gebogener Vorsprung ausgebildet sein, wie in Figur 6 näher dargestellt.

Ein der Abtastspitze 136 gegenüberliegendes Ende des Federelements 134 kann ortsfest ausgebildet sein. Beispielsweise kann das ortsfeste Ende des Federelements 134 mit dem Mikroschalter 120 gekoppelt, insbesondere an diesem befestigt sein. Ein zwischen der Abtastspitze 136 und dem ortsfesten Ende liegender Federabschnitt 138 kann als Betätigungsabschnitt 140 zum Betätigen des inneren Schaltelements (nicht dargestellt) des Mikroschalters 120 ausgebildet sein.

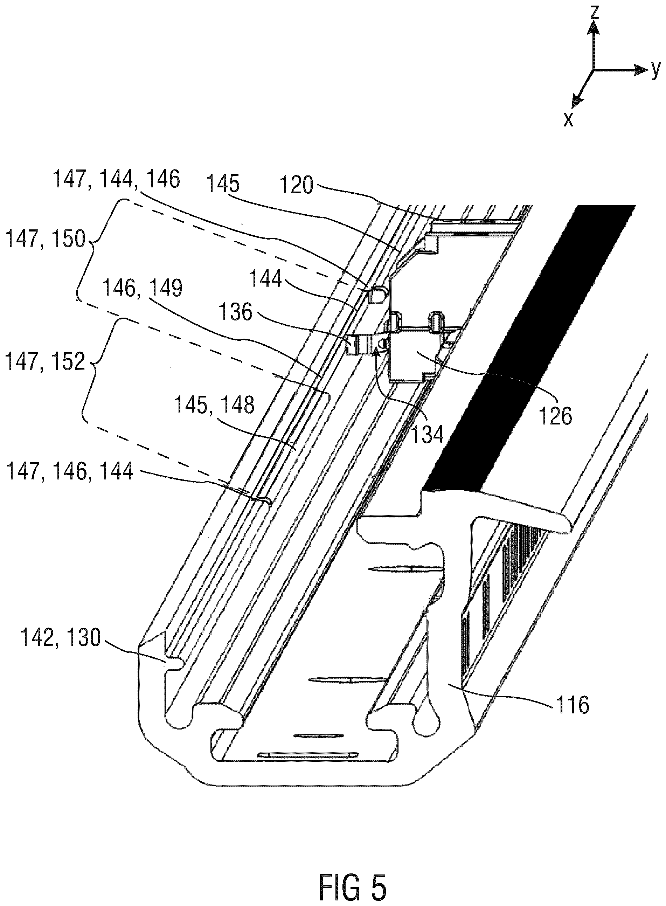

Figur 5 zeigt eine perspektivische und im Bereich des montierten Mikroschalters 120 teilausgeschnittene Ansicht der Längsverstelleinrichtung 110.

Das Federelement 134 mit seiner vom Mikroschalter 120 abgewandten und dem Gegenabtastelement 130 zugewandten Abtastspitze 136 ist derart eingerichtet, dass beim Niederdrücken der Abtastspitze 136 aufgrund der abschnittsweisen Kontaktierung mit dem Gegenabtastelement 130 beim Verfahren der Oberschiene 114 relativ zur Unterschiene 116 in Längsrichtung x entlang des Gegenabtastelements 130 der Betätigungsabschnitt 140 (dargestellt in Figuren 2, 3 und 6) mit dem inneren Schaltelement des Mikroschalters 120 in Kontakt gerät.

Beispielsweise kann die Abtastspitze 136 von einem gedachten Drehpunkt des Federelements 134 beim Niederdrücken selbiger weiter entfernt liegen als der Kontaktbereich oder der Betätigungsabschnitt 140 zum Schaltelement. Somit kann eine große Bewegung der Abtastspitze 136 in eine kleinere, für den Schaltvorgang ausreichende Bewegung übersetzt werden.

Diese Abtastspitze 136 steht im Kontakt mit dem Gegenabtastelement 130. Das Gegenabtastelement 130 kann beispielsweise als eine Rippe 142 ausgebildet sein. Die Rippe 142 kann beispielsweise an einer Innenwand einer der Unterschienen 116 angeordnet und ausgebildet sein.

Während einer Verstellung des Fahrzeugsitzes 100 und damit der Oberschiene 114 (in Figur 5 zur besseren Übersicht nicht dargestellt, dargestellt in Figur 4) gleitet die Abtastspitze 136 auf der Rippe 142 in Längsrichtung x entlang. Dabei kontaktiert das Abtastelement 128, insbesondere dessen Abtastspitze 136, abschnittsweise mit dem Gegenabtastelement 130, insbesondere mit der Rippe 142. Beispielsweise ist das Gegenabtastelement 130 derart ausgebildet, dass die Abtastspitze 136 in einem Abschnitt kontaktiert oder stärker kontaktiert und in einem nächsten Abschnitt nicht kontaktiert beziehungsweise geringer kontaktiert.

Beispielsweise kann das Gegenabtastelement 130 eine Anzahl von verschiedene Längsverstellpositionen, insbesondere zur Einstellung einer Sitzposition in einem Komfortbereich 150 und/oder einer Einstiegposition in einem Easy-Entry-Bereich 152 des Fahrzeugsitzes 100, repräsentierenden Tastabschnitten, insbesondere Rippenabschnitten 146, 148, umfassen. Diese Tastabschnitte sind mittels des Abtastelements 128 abtastbar, um eine die verschiedenen Längsverstellpositionen repräsentierende. Signalfolge 154 (in Figur 6 dargestellt) am Mikroschalter 120 zu erzeugen. Hierzu ist das Gegenabtastelement 130 als Rippe 140 mit den Rippenabschnitten 146, 148 ausgebildet. Anstelle einer Rippe 142 kann das Gegenabtastelement 130 auch als eine Nut oder als ein Schlitz jeweils mit Vorsprüngen in diesen zur Ausbildung von Tastabschnitten eingerichtet sein (nicht näher dargestellt). Die Rippe 142 kann hierzu beispielsweise über Bereiche oder Abschnitte in Längsrichtung x unterschiedliche Rippenhöhen 145 in Querrichtung y, unterschiedliche Rippenlängen 147 in Längsrichtung x und/oder unterschiedliche Rippenbreiten in Vertikalrichtung z aufweisen.

Zur Erzielung unterschiedlicher Rippenhöhen 145 und/oder unterschiedlicher Rippenlängen 147 können zum Beispiel in Abständen Nuten 144 in die Rippe 142 eingefräst sein. Hierdurch können in Längsrichtung x unterschiedlich lange Abschnitte ausgebildet werden. Beispielsweise sind erste Rippenabschnitte 146 kurze Abschnitte, gebildet durch Nuten 144, insbesondere Schlitze oder Ausfräsungen. Die ersten Rippenabschnitte 146 weisen eine große Rippenhöhe 145 auf. Ein weiterer kurzer erster Rippenabschnitt 146 mit großer Rippenhöhe 145 kann beispielsweise am Ende eines zweiten Rippenabschnitts 148 mit niedriger Rippenhöhe 149 ausgebildet sein. Dieser zweite Rippenabschnitt 148 mit niedriger Rippenhöhe 149 liegt zwischen zwei ersten Rippenabschnitten 146 mit großer Rippenhöhe 145.

Jedem Rippenabschnitt 146, 148 ist insbesondere eine Längsverstellposition zugeordnet. Beispielsweise kann dem ersten Rippenabschnitt 146 eine erste Längsverstellposition in einem Komfortbereich 150 zur Einstellung einer komfortablen Sitzposition und/oder ein Endstopp 162, 164 (dargestellt in Figur 6) zugeordnet sein. Dem zweiten Rippenabschnitt 148 kann eine zweite Längsverstellposition in einem Easy-Entry-Bereich 152 zur Einstellung eines verbesserten Zugangs zu einem hinteren Sitzbereich zugeordnet sein. Die Rippenabschnitte 146, 148 können jeweils eine zugehörige Rippenhöhe 145, eine zugehörige Rippenlänge 147 und/oder eine zugehörige Rippenbreite umfassen. Beispielsweise können die verschiedenen, insbesondere zwei aneinander grenzenden, Längsverstellpositionen des Fahrzeugsitzes 100 durch identische Rippenhöhe 145 bei unterschiedlicher Rippenlänge 147 oder durch unterschiedliche Rippenhöhe 145 bei identischer Rippenlänge 147 oder einer anderen geeigneten Kombination von Rippenhöhe 145, Rippenlänge 147 und/oder Rippenbreite der Rippe 142 konfiguriert sein.

In Abhängigkeit von den jeweils konfigurierten Rippenabschnitten 146, 148 und einer daraus resultierenden Abtastfolge des Abtastelements 128 am Gegenabtastelement 130 kann der Mikroschalter 120 eine entsprechende Signalfolge 154 (dargestellt in Figur 6) erzeugen, welche die verschiedenen Längsverstellpositionen des Fahrzeugsitzes 100 repräsentieren, so dass die jeweils eingenommene Längsverstellposition in einfacher Art und Weise anhand der Signalfolge 154 bestimmt werden kann.

Der schlitzförmige erste Rippenabschnitt 146, nach dem zweiten Rippenabschnitt 148 mit niedriger Rippenhöhe 149 in Längsrichtung x gesehen, kann einen Abstand zum zweiten Rippenabschnitt 148 aufweisen, der der Länge der kurzen Ausfräsung entspricht, um auch an diesem Ende eine Endstopp-Abtastfolge, insbesondere eine Endstopp-Signalfolge der Abtastspitze 136 beim Überfahren der Rippe 140 zu erzeugen.

Die Übersetzung von Abtastspitze 136 zum inneren Schaltelement des Mikroschalters 120 erlaubt es, die Höhenunterschiede der Rippe 142 derart auszulegen, dass Schaltzustände des Mikroschalters 120 trotz aller Toleranzen sicher erkannt werden können.

Die Sensorelektronik 126, zum Beispiel eine CPU und eine zugehörige Programmierung, ermöglichen die Auswertung der Mikroschaltersignale und dessen Signalfolgen. Es können also nicht nur die Zustände "offen" oder "HR" (high resistance, Hochwiderstand) und "geschlossen" oder "LR" (low resistance, Niedrigwiderstand) ausgewertet werden, sondern auch deren zeitliche Abfolgen.

Die Rippe 142 kann insbesondere sowohl kurze ausgefräste Bereiche (= erste Rippenabschnitte 146) als auch lange hohe Bereiche (= zweite Rippenabschnitte 148) aufweisen.

Dabei können die Rippenabschnitte 146, 148 unterschiedlicher Höhe zum Beispiel einen eingestellten Komfortbereich 150, welcher durch eine geringere Rippenhöhe gebildet wird, und einen eingestellten Easy-Entry-Bereich 152, welcher durch eine größere Rippenhöhe gebildet wird, des Fahrzeugsitzes 100 repräsentieren.

Figur 6 zeigt eine Schnittdarstellung der Längsverstelleinrichtung 110.

In Figur 6 sind die Zusammenhänge zwischen der Rippe 142 (= Schienenrippenprofil) und einer Signalabfolge 154, erzeugt vom Mikroschalter 120 gezeigt.

Die kurzen Ausnehmungen oder Nuten 144 (= erste Rippenabschnitte 146 mit niedriger Rippenhöhe 149) in den Endbereichen 158 sind wesentlich kürzer als eine Verriegelungsteilung 156 der Oberschiene 114. So kann nach einer Schienenverriegelung der Komfortbereich 150 sicher vom Easy-Entry-Bereich 152 unterschieden werden.

Mittels des Mikroschalters 120 können beispielsweise anhand der kurzen ersten Rippenabschnitte 146 die Endbereiche 158 der Rippe 142 und damit die Enden (auch Endstopp genannt) des Gesamtverstellbereichs der Oberschiene 114 relativ zur Unterschiene 116 sicher während eines Verstellens der Oberschiene 114 detektiert werden.

Die kurzen ersten Rippenabschnitte 146 in den Endbereichen 158 und ein daraus resultierender erster Signalabschnitt 154.1 an einem Ende der Signalfolge 154 und ein zweiter Signalabschnitt 154.2 am anderen Ende der Signalfolge 154 unterscheidet sich von einem Übergang 160 oder Wechsel zwischen einem dritten Signalabschnitt 154.3 für den Komfortbereich 150 und einen vierten Signalabschnitt 154.4 für den Easy-Entry-Bereich 152, unabhängig von der Bewegungsrichtung des Fahrzeugsitzes 100. Dabei kann der erste Signalabschnitt 154.1 beispielsweise einen ersten Endstopp 162 hinten repräsentieren und der zweite Signalabschnitt 154.2 einen zweiten Endstopp 164 vorne repräsentieren.

Diese Endbereiche 158 der Rippe 142 und die zugehörige Signalfolge 154 können zudem für eine Kalibrierung nach dem Einbau des Fahrzeugsitzes 100 verwendet werden. Unter Kalibrierung wird insbesondere verstanden, dass eine Sitzposition, insbesondere eine Sitzeinbaulage oder Sitzeinbauposition, des Fahrzeugsitzes 100 anfangs bestimmt und gespeichert wird. Nach einem Stromausfall kann die Sitzposition unbekannt sein. Durch die Kalibrierung (auch Reset genannt) kann dann die Sitzposition angepasst, zum Beispiel auf die anfangs bestimmte und gespeicherte Sitzposition wieder eingestellt, werden.

Die Signalfolge 154 in den Endbereichen 158 und somit angrenzend zu dem Komfortbereich 150 an dem einen Ende oder angrenzend zu dem Easy-Entry-Bereich 152 an dem anderen Ende der Rippe 142 können ferner für eine Erkennung und Auslösung oder Aktivierung eines sogenannten Soft-Stopp verwendet werden.

Beispielsweise kann bei mittels der Sensorelektronik 126 erkanntem Verlassen des Komfortbereichs 150, zum Beispiel nach Ablauf einer vorgegebenen Zeit nach Erkennen des Komfortbereichs 150, oder Verlassen des Easy-Entry-Bereichs 152, zum Beispiel nach Ablauf einer vorgegebenen Zeit nach Erkennen des Easy-Entry-Bereichs 152, und vor Erreichen des jeweiligen Endstopps 162 beziehungsweise 164 die Geschwindigkeit bis zum endgültigen Erreichen der Endstopps 162, 164 in einem fünften Signalabschnitt 154.5 und einem sechsten Signalabschnitt 154.6 bis Erreichen und damit Erkennen des jeweiligen erreichten Endstopps 162, 164 abgesenkt werden, um Geräuschpegel gering zu halten und auch die Dauerfestigkeit der Komponenten zu verbessern.

Die Rippe 142 ist beispielsweise derart gestaltet, dass diese im Komfortbereich 150 eine niedrige Rippenhöhe 149 (= erster Rippenabschnitt 146) aufweist, so dass kein Kontakt zwischen Abtastspitze 136 und der Rippe 142 besteht. So kann sichergestellt werden, dass keine Schleifgeräusche oder dergleichen während des Verstellens auftreten.

Im Easy-Entry-Bereich 152 weist die Rippe 142 eine große Rippenhöhe 145 (= zweiter Rippenabschnitt 148) auf, so dass die Abtastspitze 136 auf der Rippe 142 gleitet. Hierdurch kann es zu Schleifgeräuschen kommen, die aber aufgrund der schnellen Antriebsgeschwindigkeit und zugehöriger Motoren-/Getriebegeräusche des Verstellmotors, die generell geräuschintensiver sind, vernachlässigbar sind.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 117: Kontaktfläche
- 118: Positionserkennungseinrichtung
- 120: Mikroschalter
- 122: Kontaktöffnung
- 124: Kontaktanschluss
- 125: Gehäuseflansch
- 126: Sensorelektronik
- 128: Abtastelement
- 129: Tastöffnung
- 130: Gegenabtastelement
- 132: Zwischenraum
- 134: Federelement
- 136: Abtastspitze
- 138: Federabschnitt
- 140: Betätigungsabschnitt
- 142: Rippe
- 144: Nut
- 145: hohe Rippenhöhe
- 146: erster Rippenabschnitt
- 147: Rippenlänge
- 148: zweiter Rippenabschnitt
- 149: niedrige Rippenhöhe
- 150: Komfortbereich
- 152: Easy-Entry-Bereich
- 154: Signalfolge
- 154.1 bis 154.6: Signalabschnitt
- 156: Verriegelungsteilung
- 158: Endbereich
- 160: Übergang
- 162: erster Endstopp
- 164: zweiter Endstopp

- x: Längsrichtung
- y: Querrichtung
- z: Vertikalrichtung

## Patentansprüche

1. Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114), in welcher eine Positionserkennungseinrichtung (118) zur Erfassung einer eingenommenen Verstellposition angeordnet ist, wobei die Positionserkennungseinrichtung (118) als ein Mikroschalter (120) ausgebildet ist.

2. Längsverstelleinrichtung (110) nach Anspruch 1,
**dadurch gekennzeichnet, dass** der Mikroschalter (120) einen in Richtung des Fahrzeugsitzes (100) weisenden Kontaktanschluss (124) umfasst.

3. Längsverstelleinrichtung (110) nach Anspruch 1 oder 2,
**dadurch gekennzeichnet, dass** der Mikroschalter (120) mit einem Abtastelement (128) versehen ist.

4. Längsverstelleinrichtung (110) nach Anspruch 3,
**dadurch gekennzeichnet, dass** das Abtastelement (128) innerhalb der Schienenanordnung (112) mit einem Gegenabtastelement (130) in Wechselwirkung steht.

5. Längsverstelleinrichtung (110) nach Anspruch 3 oder 4,
**dadurch gekennzeichnet, dass** das Abtastelement (128) als ein Federelement (134) ausgebildet ist.

6. Längsverstelleinrichtung (110) nach Anspruch 5,
**dadurch gekennzeichnet, dass** das Abtastelement (128) an einem vom Mikroschalter (120) abgewandten Ende des Federelements (134) eine Abtastspitze (136) aufweist.

7. Längsverstelleinrichtung (110) nach Anspruch 5 oder 6,
**dadurch gekennzeichnet, dass** das Federelement (134) als ein Federhebel, ein Federarm, eine Flachformfeder oder Bandfeder ausgebildet ist.

8. Längsverstelleinrichtung (110) nach einem der Ansprüche 6 oder 7,
**dadurch gekennzeichnet, dass** die Abtastspitze (136) und das Federelement (134) derart eingerichtet sind, dass beim Niederdrücken der Abtastspitze (136) das Federelement (134) in Richtung des Mikroschalters (120) bewegbar ist und mit diesem Mikroschalter (120) kontaktiert und diesen betätigt.

9. Längsverstelleinrichtung (110) nach einem der Ansprüche 3 bis 8,
**dadurch gekennzeichnet, dass** das Abtastelement (128) bei einem Verstellen der Oberschiene (114) relativ zur Unterschiene (116) mit dem Gegenabtastelement (130) abschnittsweise kontaktiert.

10. Längsverstelleinrichtung (110) nach einem der Ansprüche 4 bis 8,
**dadurch gekennzeichnet, dass** das Gegenabtastelement (130) eine Anzahl von verschiedene Längsverstellpositionen repräsentierenden Tastabschnitten umfasst, die mittels des Abtastelements (128) abtastbar sind, um eine die verschiedenen Längsverstellpositionen repräsentierende Signalfolge (154) am Mikroschalter (120) zu erzeugen.

11. Längsverstelleinrichtung (110) nach einem der Ansprüche 4 bis 9,
**dadurch gekennzeichnet, dass** das Gegenabtastelement (130) als eine Rippe (142) ausgebildet ist.

12. Längsverstelleinrichtung (110) nach Anspruch 11,
**dadurch gekennzeichnet, dass** die Rippe (142) eine Anzahl von Rippenabschnitten (146, 148) umfasst.

13. Längsverstelleinrichtung (110) nach Anspruch 12,
**dadurch gekennzeichnet, dass** die Rippenabschnitte (146, 148) jeweils eine zugehörige Rippenhöhe (145), eine zugehörige Rippenlänge (147) und/oder eine zugehörige Rippenbreite umfassen.

14. Längsverstelleinrichtung (110) nach Anspruch 12 oder 13,
**dadurch gekennzeichnet, dass** der jeweilige Rippenabschnitt (146, 148) einer vorgegebenen Längsverstellposition zugeordnet ist.

15. Fahrzeugsitz (100) mit einer Längsverstelleinrichtung (110) nach einem der vorhergehenden Ansprüche 1 bis 14.
